(19) Europäisches Patentamt / European Patent Office / Office européen des brevets

(11) **EP 3 906 634 B1**

(12) **EUROPEAN PATENT SPECIFICATION**

(45) Date of publication and mention
of the grant of the patent:
**25.06.2025 Bulletin 2025/26**

(21) Application number: **19702565.3**

(22) Date of filing: **29.01.2019**

(51) International Patent Classification (IPC):
**H04L 9/08** *(2006.01)*      **H04L 1/00** *(2006.01)*
**H03M 13/11** *(2006.01)*      **H03M 13/13** *(2006.01)*

(52) Cooperative Patent Classification (CPC):
**H04L 9/0858; H04L 1/0057; H03M 13/1102;**
**H03M 13/13**

(86) International application number:
**PCT/EP2019/052103**

(87) International publication number:
**WO 2020/156641 (06.08.2020 Gazette 2020/32)**

(54) **DEVICE AND METHOD FOR PROCESSING DATA OF A QUANTUM KEY DISTRIBUTION SYSTEM**

VORRICHTUNG UND VERFAHREN ZUR VERARBEITUNG VON DATEN EINES
QUANTENSCHLÜSSELVERTEILUNGSSYSTEM

DISPOSITIF ET PROCÉDÉ DE TRAITEMENT DE DONNÉES D'UN SYSTÈME DE DISTRIBUTION
DE CLÉ QUANTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.11.2021 Bulletin 2021/45**

(73) Proprietor: **Huawei Technologies Duesseldorf
GmbH
40549 Düsseldorf (DE)**

(72) Inventors:
• **FUNG, Fred, Chi, Hang
80992 Munich (DE)**

• **PACHER, Christoph
1210 Vienna (AT)**
• **PEEV, Momtchil
80992 Munich (DE)**

(74) Representative: **Roth, Sebastian
Mitscherlich PartmbB
Patent- und Rechtsanwälte
Karlstraße 7
80333 München (DE)**

(56) References cited:
**EP-A1- 1 542 390      WO-A1-02/089396
US-B2- 7 653 199**

**Description**

TECHNICAL FIELD

The present disclosure generally relates to the field of the Quantum Key Distribution (QKD). More specifically, the present disclosure relates to a device and a method for processing the data of a QKD system, and generating output data strings for performing a privacy amplification. This disclosure also relates to devices and methods that generate a secret key based on the QKD.

BACKGROUND

Conventional QKD post-processing is a process performed on a classical computing device that transforms a raw key to a final secret key. It generally comprises three main steps: parameter estimation, information reconciliation, and privacy amplification.

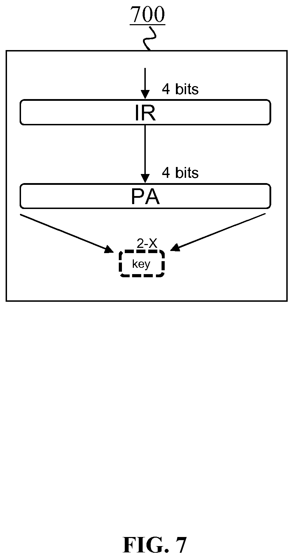

FIG. 7 schematically illustrates a conventional apparatus 700 for processing data of a QKD system.

The conventional apparatus 700 performs an information reconciliation on a 4bits data string. The conventional apparatus 700 further performs a privacy amplification on the 4bits data string. For simplicity, the example described here uses a 4 bits data string. However, in real systems the data strings on which privacy amplification is performed are much larger that this data string, for example of the order of magnitude of $10^9$. Such large data strings increase the computational complexity of the privacy amplification schemes used on QKD systems. The conventional apparatus 700 performs privacy amplification further performs an additional reduction of X bits, for example, due to information leakage in the quantum channel, to arrive at a key of (2-X) bits.

EP1542390A1 discloses a quantum key distribution method with which it is possible to create a highly-secured common key.

US7653199B2 discloses an apparatus and a method for establishing a secret key to encrypt and share data using quantum signals represented by an equiangular spherical code and using classical signals in authenticating the key.

It is desirable to improve the performance and reduce the complexity of post processing schemes, such as privacy amplification operations and thus to provide an improved device and method, e.g., for processing data of the QKD systems and generating secret keys.

SUMMARY

In view of the above-mentioned problems and disadvantages, embodiments of the present invention aim to improve the conventional devices and methods for processing data of the QKD systems. An objective is to reduce the complexity of privacy amplification and the overall QKD post-processing. Further, throughput should be increased.

The objective is achieved by the solution provided in the enclosed independent claims. Advantageous implementations are further defined in the dependent claims.

In particular the present disclosure proposes a device for processing the data of the QKD systems. Specifically, the device may generate an output data string, whose size is reduced compared to that of conventional system, and it may further perform privacy amplification on the generated output data string. In some embodiments, the device may be a transmitting device (Alice) or a receiving device (Bob) of the QKD system. In some embodiments, the device may be incorporated in the transmitting device or in the receiving device. For example, the device may form a part of the transmitting device (or the receiving device), and it may further be embodied in a separate device, without limiting the present disclosure to a specific configuration of the device.

The main advantages provided by the device can be summarized as:

- Reducing the complexity of the privacy amplification (e.g., reducing the input length).
- Increasing the throughput of the error-corrected key bits being processed by the privacy amplification.
- Reducing the randomness needed for the privacy amplification.

The present invention is defined by a device according to independent claim 1, a method according to independent claim 11, a computer program according to independent claim 12, and a computer program product according to independent claim 13.

A first aspect provides a device for processing data of a quantum key distribution system, the device being configured to obtain a pre-defined map based on an information reconciliation scheme; apply the obtained map to an error corrected data string to generate an output data string, the output data string being shorter than the error corrected data string; and perform privacy amplification on the output data string.

For example, in some embodiments, the device may identify the space of possible output strings that are consistent with the classical announcement in the information reconciliation step, using specifics of the information reconciliation step such as the redundancy information. Moreover, the device may further assign a map from the possible output strings to bit representations with less number of bits. The device of the first aspect may have the advantage of enabling the privacy amplification to be operated on the shorter inputs, i.e., the privacy amplification in the QKD system may be performed with a reduced complexity compared to the conventional privacy amplification.

In an implementation form of the first aspect, the device is further configured to determine a signature of the error corrected data string in accordance with the information reconciliation scheme; and obtain the pre-defined map based on the determined signature and the information reconciliation scheme.

This is beneficial, since the predefined-map can be obtained. Moreover, the data string for determining the signature is already error corrected.

In a further implementation form of the first aspect, the signature is associated to at least one constraint in the information reconciliation scheme.

This is beneficial, since the signature of the error corrected data string may be determined.

In a further implementation form of the first aspect, the information reconciliation scheme includes a parity-check matrix and a generator matrix.

The parity-check matrix and the generator matrix are a compact definition of a linear error correcting code and can be decoded using efficient algorithms. Moreover, the randomness needed for the privacy amplification may be reduced.

In a further implementation form of the first aspect, the signature is a syndrome determined by applying the parity-check matrix to the error corrected data string.

This is beneficial, since the syndrome is a compact and easily obtainable representation of a signature.

In a further implementation form of the first aspect, the at least one constraint is defined by the parity-check matrix.

For example, obtaining the pre-defined map may be done based on a relationship between the bits of the error corrected data string and the parity-check matrix and/or the syndrome meeting a predefined criterion.

In a further implementation form of the first aspect, the output data string is determined from the positions of the information bits corresponding to the identity matrix in the generator matrix.

This allows to easily transform the error corrected data string into the reduced size output string. In particular, the position of the identity matrix may be used to uniquely identify and extract the bits of the error corrected data string that will form the output data string.

In a further implementation form of the first aspect, mapping the error corrected data string to the output data string comprises extracting symbols from the error corrected data string, wherein the positions of the extracted symbols corresponds to the positions of the non-zero elements of the identity matrix in the generator matrix.

This is beneficial because such mapping is simple to implement and has low complexity. In a further implementation form of the first aspect, the applied map is a one-to-one function.

The implementation, where the applied map is a one-to-one function is different, for example, from the error correction and the privacy amplification schemes, in which the used mappings are many-to-one functions.

In a further implementation form of the first aspect, the error corrected data string is derived from at least one raw key associated with quantum states of light generated or received by the device.

For example, the device may receive the raw key. They raw key may be associated with the quantum state of the light.

In a further implementation form of the first aspect, performing the privacy amplification procedure comprises generating a secret key from the output data string.

A second aspect provides a method for processing data of a quantum key distribution system, the method comprising obtaining a pre-defined map based on an information reconciliation scheme; applying the obtained map to an error corrected data string to generate an output data string, the output data string being shorter than the error corrected data string; and performing privacy amplification on the output data string.

In an implementation form of the second aspect, the method further comprising determining a signature of the error corrected data string in accordance with the information reconciliation scheme; and obtaining the pre-defined map based on the determined signature and the information reconciliation scheme.

In a further implementation form of the second aspect, the signature is associated to at least one constraint in the information reconciliation scheme.

In a further implementation form of the second aspect, the information reconciliation scheme includes a parity-check matrix and a generator matrix.

In a further implementation form of the second aspect, the signature is a syndrome determined by applying the parity-check matrix to the error corrected data string.

In a further implementation form of the second aspect, the at least one constraint is defined by the parity-check matrix.

In a further implementation form of the second aspect, the output data string is determined from the positions of the information bits corresponding to the identity matrix in the generator matrix.

In a further implementation form of the second aspect, the method further comprising extracting symbols from the error corrected data string, wherein the positions of the extracted symbols corresponds to the positions of the non-zero elements of the identity matrix in the generator matrix.

In a further implementation form of the second aspect, the applied map is a one-to-one function.

In a further implementation form of the second aspect, the method further comprising deriving the error corrected data string from at least one raw key associated with quantum states of light generated or received by the device.

**In** a further implementation form of the second aspect, the method further comprising generating a secret key from the output data string.

The method of the second aspect and its implementation forms provide the same advantages as described above for the device of the first aspect and its respective implementation forms.

A third aspect provides a computer program comprising program code causing a computer to perform the method according to the second aspect, when being carried out on a computer.

A fourth aspect provides a computer program product including computer program code, which, when executed by a processor, causes the method according to the second aspect to be performed.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

## BRIEF DESCRIPTION OF DRAWINGS

The above described aspects and implementation forms of the present invention will be explained in the following description of specific embodiments in relation to the enclosed drawings, in which

FIG. 1 schematically illustrates an embodiment of a device for processing data of a QKD system, according to an embodiment of the present invention.

FIG. 2 schematically illustrates the device for processing data of the QKD system by applying the map, according to an embodiment of the present invention.

FIG. 3 schematically illustrates a procedure for processing data of the QKD system, based on a syndrome computed using the parity-check matrix, according to an embodiment of the present invention.

FIG. 4 schematically illustrates an exemplary procedure for determining the set of strings that are compatible with the predefined syndrome s, according to an embodiment of the present disclosure.

FIG. 5 schematically illustrates a procedure for processing the data of the QKD system, based on a syndrome including random codewords, according to an embodiment of the present invention.

FIG. 6 shows a schematic view of a method for processing data of the QKD system, according to an embodiment of the present invention.

FIG. 7 schematically illustrates a conventional apparatus for processing data of a QKD system.

FIG. 8 schematically illustrates a conventional QKD post processing procedure.

FIG. 9 schematically illustrates a binary information reconciliation and privacy amplification schemes.

## DETAILED DESCRIPTION OF EMBODIMENTS

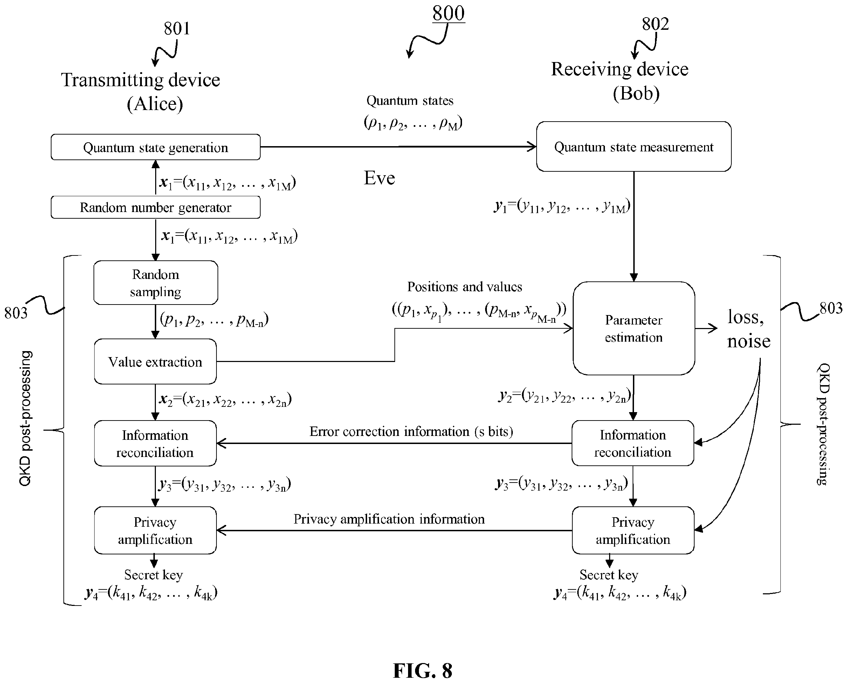

FIG. 8 schematically illustrates a QKD post processing procedure 800. A transmitting device 801 (corresponding to the user Alice) generates the quantum states, and further transmits the quantum states to a receiving device 802 (corresponding to the user Bob), An eavesdropper, Eve may be also present. The receiving device 802 further measures the transmitted quantum states. Moreover, the transmitting device 801 and the receiving device 802 may further generate the raw keys based on their corresponding quantum states and/or the measurement results of them.

Moreover, post processing 803 of the data of QKD system is performed (i.e. QKD post-processing in FIG. 8). In the parameter estimation step, Alice and Bob estimate the properties of the quantum channel, which allow them to infer how much error is in the raw key and how much information about the raw key has been leaked to Eve.

In the information reconciliation step, Alice and Bob correct the differences in their keys to arrive at matching keys. In most cases, only one of them performs error correction on one's key to match the other's key.

Furthermore, in the privacy amplification step, Alice and Bob perform a length-shortening operation that is specially designed to remove Eve's information on the key.

In conventional QKD post-processing, the amount of privacy amplification to be done is determined by the estimation of the amount of information leaked to Eve. Information may be leaked to Eve, for example, by her attack on the quantum channel and by her listening to the information sent during the information reconciliation.

Moreover, in conventional QKD post-processing, typically, a significant amount of information is leaked during the information reconciliation. The traditional way of dealing with the information leakage is based on counting the number of bits transmitted during the information reconciliation, and privacy amplifying this number of bits away in the final key.

Specifically, if the number of key bits produced by the information reconciliation is n and the number of bits transmitted during this step is s (according to the scheme presented in FIG. 8), then the privacy amplification transforms the intermediate key with the length of n to a final key with the length of $k = n - s - r$, where r is the amount of bits to reduced due to information leaked in other ways such as in the quantum channel. Thus, in this case, the privacy amplification is a map of "n-bit-to-k-bit". Moreover, when n is a large number, the privacy amplification step becomes computationally intensive, in other words, it may be time consuming to perform the privacy amplification.

Universal hashing, in particular hashing based on the Toeplitz matrices, is often used to implement the privacy amplification. In the case of the Toeplitz-matrix hashing, the input vector of length *n* is multipled with a randomly chosen Toeplitz matrix of size *k* times *n* ($k \times n$), for producing an output vector of length *k*. Moreover, since *n* is usually large, for example, $10^9$ for the continuous-variable QKD (CV-QKD) with finite-size effect taken into account, the privacy amplification operation is computationally intensive. Instead of directly computing the matrix multiplication, faster speed can be achieved by performing the operation in the transform domain, such as by using the fast Fourier transform, the number-theoretic transform, etc. This procedure is often performed in practice. However, the speed is still slow in practical settings, and when n is large value, the overall post-processing speed is limited by the privacy amplification speed.

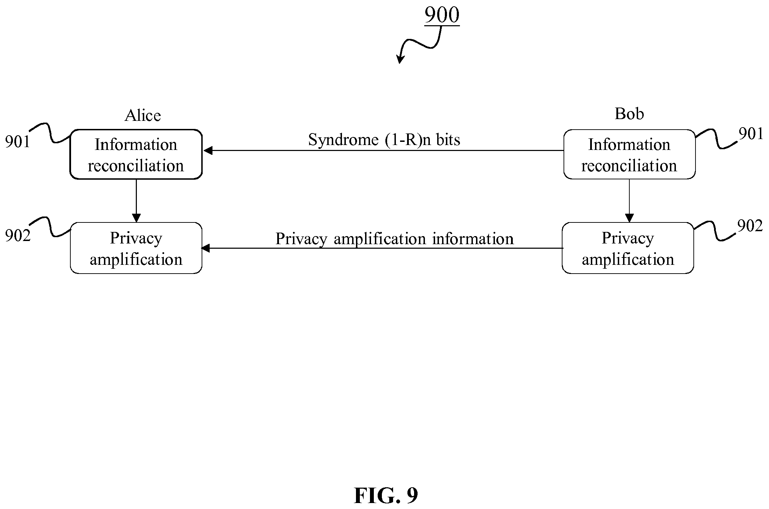

FIG. 9 schematically illustrates a binary scheme 900 of information reconciliation 901 and privacy amplification 902.

The amount of information leakage during information reconciliation 901 depends on the actual information reconciliation (related to the s mentioned above).

In the information reconciliation step 901 of FIG. 9, Alice (e.g., the transmitting device) and Bob (e.g., the receiving device) first agree on a binary error correction code. One party, for example, Bob, computes the syndrome of his key bits using the parity-check matrix of the binary error correction code. Afterward, Bob transmits the syndrome to Alice. Alice runs a decoding process on her key bits to correct errors in the bits with the target of having a matching syndrome with Bob's syndrome. In this case, the amount of leaked information due to the information reconciliation step 901 is the length of the syndrome. Moreover, for a linear error correcting code with a code rate of $R = k/n$, the length of the syndrome is $s = (1 - R)n = n - k$. The code rate R is the ratio of the number of information bits k to the number of bits n in a code word. In general, error correcting codes that can correct more errors have smaller code rates.

In an implementation, the syndrome of a string of length n may be defined as the n-k string obtained by applying a parity check matrix $H^{n-k,n}$ associated to an information reconciliation scheme, for instance an Error Correction Code, to the string. The Error Correction Code may, for example, be an [n, k] linear code.

For the Continues Variable (CV)-QKD, since the Signal to Noise Ratio (SNR) is usually low, the powerful error correcting codes are often used and thus R is small (e.g., $R$=0.05). This means that the amount of information leaked during information reconciliation is 0.95n bits. This also implies that the privacy amplification matrix mentioned above has a size of at most 0.05 *n* times *n* (which has yet to include leakages other than that in the information reconciliation step). When n is large (e.g., $10^9$), this matrix is large and multiplication of it (or the transform equivalent) becomes computationally intensive.

Note that, the reconciliation scheme illustrated in FIG. 8 is based on a reverse reconciliation in which, the error correction information is sent by Bob to Alice so that Alice corrects her string to match Bob's string. However, the QKD can also work with direction reconciliation in which the error correction information is sent by Alice to Bob so that Bob corrects his string to match Alice's string.

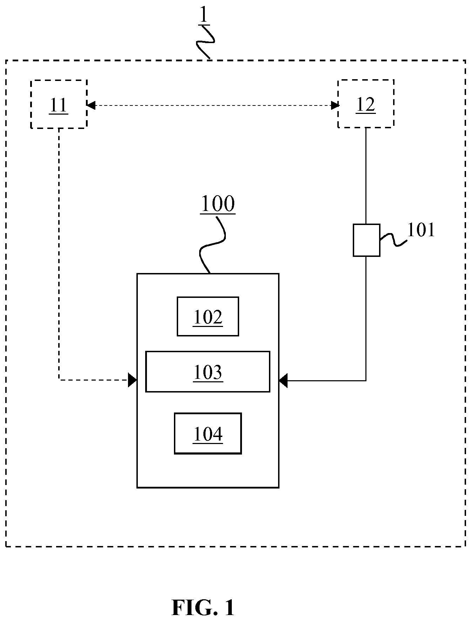

FIG. 1 schematically illustrates an embodiment of the device 100 for processing data of the QKD system 1, according to an embodiment of the present invention.

The device 100 may be (or it may be incorporated in) a transmitting device (also hereinafter referred as Alice) or a receiving device (also hereinafter referred as Bob).

For example, the QKD system 1 may include the transmitting device 11 (or Alice) which generates and transmit the quantum state of the light and the device 100. Moreover, the quantum state of the light may be received by the receiving device 12 (or Bob). In the embodiment of the FIG. 1, it is exemplary shown that the device 100 obtains the data of the QKD system (e.g., including the information reconciliation scheme 101) from the receiving device 12, as it is indicated with a solid line on the right side of FIG. 1. The device 100 of FIG. 1 is exemplary a part of the receiving device. However, in some embodiments, the device 100 may obtain the data of the QKD system 1 from the transmitting device 11, as it is indicated with the dashed line on the left side of FIG. 1.

In a further realization, one standalone device 100 for each of the transmitter and the receiver may be provided.

In a further realization, the device 100 may be a part of the transmitting device 11 and of the receiving device 12.

The device 100 is configured to obtain a pre-defined map 102 based on an information reconciliation scheme 101. For example, the device 100 may obtain the raw data of the QKD system 1 and/or it may obtain the processed data including the information reconciliation scheme 101 of the QKD system 1, without limiting the present disclosure.

The device 100 is further configured to apply the obtained map 102 to an error corrected data string 103, for example obtained from the information reconciliation scheme, to generate an output data string 104, the output data string 104 being shorter than the error corrected data string 103.

The device 100 is further configured to perform privacy amplification on the output data string 104. For example, the device 100 may obtain the data. The data may be raw data or processed data from the transmitter 11 and/or the receiver 12 of the QKD system 1. Moreover, the device 100 may further process the obtained data.

The knowledge of the structure of the error correction performed in information reconciliation may be used, in order to reduce the complexity of the privacy amplification to be computed next. For instance, an intermediate step may be introduced between the information reconciliation and the privacy amplification, which can be done in a simple and deterministic manner using the above knowledge.

The device 100 may identify the space of possible output strings that are consistent with the classical announcement in the information reconciliation step, using specifics of the information reconciliation step such as the redundancy information. Moreover, the device 100 may further assign a map from the possible output strings to bit representations with less number of bits.

In some embodiments, the above steps may be done beforehand, e.g., when the post-processing is being designed, or they do not take place at the time of operation.

During the operation phase, after the information reconciliation, the map is applied to the error corrected data string 103 to generate the output data string 104 which is then privacy amplified. In the privacy amplification, only information leaked through means other than the information reconciliation step may be considered. In this way, privacy amplification operates on shorter strings 104 (i.e., the output data string) and may be done faster. For example, in the case of the CVQKD, since the SNR is usually low and thus the code rate is low (e.g., R = 0.05). Thus the map may be applied, e.g., as an intermediate step between the information reconciliation and the privacy amplification. The applied map selects $k = Rn = 0.05n$ bits from the n bits. This is a small subset of the bits. In addition, the privacy amplification takes 0.05n bits as input instead of n bits as in the standard method. Thus a reduction of 20 times is obtained, which translates into a speedup of roughly 20 times for privacy amplification.

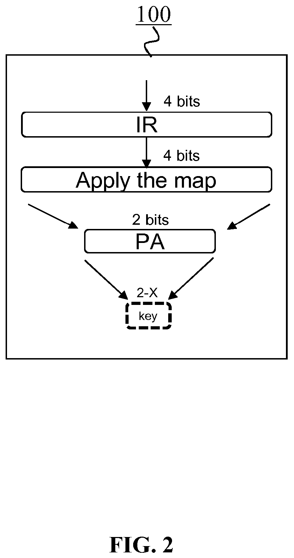

FIG. 2 schematically illustrates the device 100 for processing data of the QKD system 1 based on applying the map, according to various embodiments of the present invention. For instance, the device of FIG. 2 may be the device of FIG. 1.

For the sake of simplicity, figure 2 illustrates the device 100 performing an information reconciliation on a 4bits data string. Clearly, strings involved in the described process may be far larger than the 4bit data string used in this figure for explicative purposes. The device 100 further applies the map. The device 100 receives as an input the 4 bits error corrected data string and it further generates 2 bits output data string. The 2 bits generated output data string, will be used for performing a privacy amplification. The privacy amplification further performs an additional reduction of X bits, for example, due to information leakage in the quantum channel, to arrive at a key of (2-X) bits.

Moreover, the device 100 further generates the secret key (key).

In some embodiments, the information reconciliation may use a linear binary repetition code to perform error correction, e.g., where Alice (e.g., the transmitter device) performs the Low-Density-Parity-Check (LDPC) decoding on her key bits with the goal of having a matching syndrome with Bob's (e.g., the receiver device). For example, the parity-check matrix (H) may be defined as:

$$H = \begin{bmatrix} 1 & 1 & 1 & 1 \\ 1 & 1 & 0 & 0 \end{bmatrix}, \tag{1}$$

Moreover, the classical announcement of syndrome by Bob may be $\begin{bmatrix} 0 \\ 1 \end{bmatrix}$, and Alice performs error correction based on this syndrome.

At the first step, the possible output strings that are consistent with the syndrome are 0110, 0101, 1010, and 1001, which may be verified by multiplying each of these strings with the parity-check matrix H.
At the second step, the obtained strings may be mapped to shorter strings, as follow:

$0110 \rightarrow 00$

$0101 \rightarrow 01$

$1010 \rightarrow 10$

$1001 \rightarrow 11$

This mapping is specific for the syndrome $\begin{bmatrix} 0 \\ 1 \end{bmatrix}$, and the mapping for a difference syndrome may be different.
The mapping may be an intermediate step between the information reconciliation and the privacy amplification. During the actual QKD post-processing operation, this step may be performed as in FIG. 2.
Note that, the present disclosure is not limited to a particular mapping. For example, the device 100 may map the obtained string to the shorter strings as follow:

$$0110 \rightarrow 11$$

$$0101 \rightarrow 10$$

$$1010 \rightarrow 01$$

$$1001 \rightarrow 00$$

For example, this corresponds to extracting the two bits at positions 2 and 3. Thus, the mapping step is a simple step.
The PA step now takes 2-bit input rather than 4 bits. Thus PA can operate on input string with half the length as before, and can be run faster. This concept can be extrapolated to bigger codes with a larger n.
The (e.g., smart) mapping may be performed, since the code can be described with a systematic generator matrix. In general, a map can be constructed by taking the positions of the code corresponding to the identity matrix of the generator matrix in the systematic form. These are the positions of the "information bits" of the codewords. For example, if the generator matrix may be as follow:

$$G = \begin{bmatrix} 1 & 0 & 1 & 0 & 1 \\ 1 & 1 & 0 & 0 & 0 \\ 1 & 0 & 1 & 1 & 0 \end{bmatrix}, \tag{2}$$

The map may simply extract bits at positions 2, 4, and 5, since they correspond to the identity matrix, when the matrix is in the systematic form, by permutation of the columns. Moreover, since all possible codewords are generated by the rows of the generator matrix G, and they can be uniquely indexed by the information bits. Therefore, keeping the information bits is sufficient to represent all the possible codewords.
In some embodiments, it may be possible to transform a non-systematic generator matrix to a systematic one representing an equivalent code. For instance, two binary codes are equivalent if one can be obtained from the other by permutation of the bits positions of the codewords.
In general, more realistic error correction codes with a bigger size (e.g., the codeword length of $10^6$) may be used, instead of the example above. For example, LDPC codes are often used where the parity-check matrices are sparse and with certain structures. Moreover, in order to find a straightforward map that simply extracts the positions of the code corresponding to the identity matrix, it may be necessary to find out the generator matrix beforehand. Note that, the generator matrix is not needed in standard information reconciliation, e.g., since only decoding is performed by one party. The other party does not perform encoding but instead computes the syndrome and transmits it.
Furthermore, for a binary [n, k]-code, there are $2^k$ number of codewords of length n bits, and the syndrome has a length of n - k bits. Note that, the code rate is R = k/n. The set of codewords being consistent with one syndrome may be obtained from the set of codewords that are consistent with another syndrome, e.g., by adding a fixed offset of n bits. Thus, the positions of information bits of the codewords (i.e., those associated with the identity matrix in the generator matrix) that are consistent with a particular syndrome, are the same as that of any other syndrome. Such a syndrome-independent nature of the positions makes the map straightforward. That means, a simple extraction of bits at fixed positions may be sufficient.

The map may map the n bits to k bits since there are always $2^k$ codewords that are consistent with any syndrome. And the k positions are taken to be the positions corresponding to the identity matrix in the generator matrix, which can be precomputed before the actual QKD operation.

In some embodiments, the different probabilities for the possible vectors that are compatible with the classical announcement, may be also considered.

In some embodiments, a tight set of compatible vectors may not be obtained. Moreover, a bigger set containing this set may be used. In some embodiments, the general information reconciliation, in particularly those that are of direction reconciliation type and reverse reconciliation type, may be used.

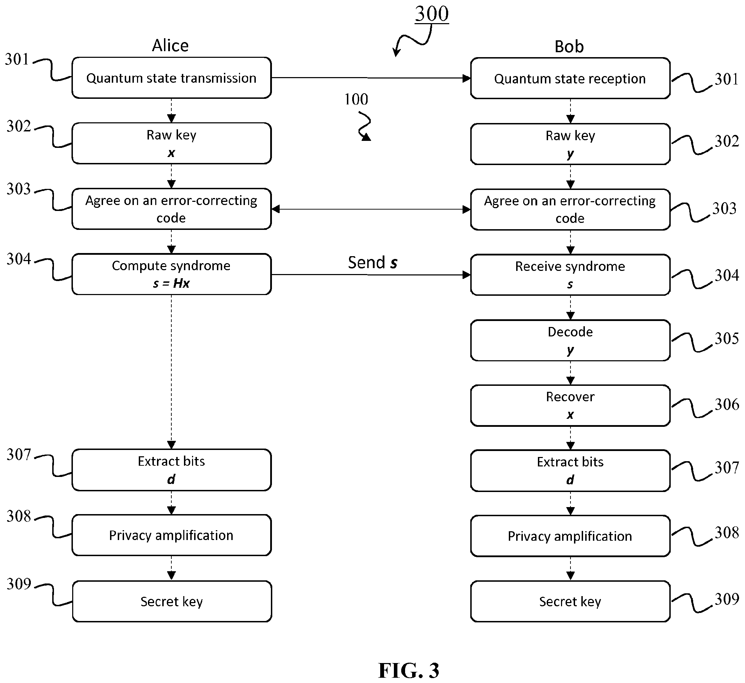

FIG. 3 schematically illustrates a procedure 300 for processing the data of the QKD system, based on a syndrome computed using the parity-check matrix H. The device 100 may, for example, performs the procedure 300 or some of the steps in the procedure 300 (e.g., the step 307), without limiting the present disclosure to a specific step or a specific function of the device.

At step 301, Alice transmits the quantum states, and Bob receives the quantum states.

At step 302, after the quantum state transmission (step 301), the raw keys at Alice and Bob, $x$ and y, respectively, are established.

At step 303, Alice and Bob agree on an error correcting code which is characterized by a generator matrix $G$ and a parity-check matrix $H$.

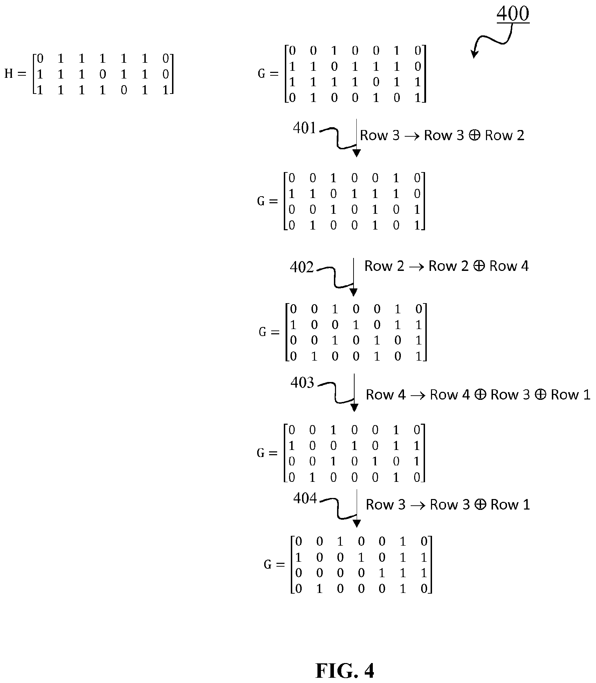

The codeword length may be large. For illustration purpose, an example of a binary code with a codeword length of 7 bits is illustrated, without limiting the present disclosure to a specific length of binary codes. The corresponding generator matrix $G$ and parity-check matrix $H$ are shown in FIG. 4.

At step 304, Alice computes the syndrome s = $Hx$ using the parity-check matrix $H$ and sends it to Bob. Moreover, Bob receives the syndrome s from Alice.

At step 305, Bob decodes his raw key y using the parity-check matrix and the syndrome s from Alice.

At step 306, after the succession of decoding process (at step 305), Bob recovers $x$.

At step 307, Bob runs a mapping operation to transform $x$ into a shorter string $d$ which is then passed to the privacy amplification step 308. Similarly, Alice may also run the mapping operation to transform $x$ into the shorter string $d$ which is then passed to the privacy amplification step 308.

At step 308, Alice and/or Bob perform the privacy amplification on the shorter string d.

At step 309, Alice and/or Bob generate the secret key.

FIG. 4 schematically illustrates an exemplary procedure 400 for determining the set of strings that are compatible with the predefined syndrome s, according to an embodiment of the present invention.

The exemplary parity-check matrix $H$ and the generator matrix $G$ that are based on binary codes with a codeword length of 7 bits are illustrated.

As discussed, in order to find a correct mapping operation, Bob (and/or Alice) may find the set of strings (i.e., code words) that are compatible with the announced syndrome $s$. For example, they may find all possible summations of any rows of the generator matrix $G$. Note that, since this is a binary code, the summation is the exclusive OR operation.

Alice and/or Bob may further find a straightforward mapping operation which maps these code words to shorter strings. As discussed, they may use the positions that correspond to the information bits of the code words as the indexes to them.

These positions can be found by performing row operations on $G$ so that an identity matrix (possibly permuted) appears. Note that the rows of the new $G$ generates the same set of codewords.

At step 401, Bob performs a row operation based on a matrix direct sum on row 3 as: *"Row 3 → Row 3 ⊕ Row 2"*.

At step 402, Bob performs a row operation based on a matrix direct sum on row 2 as: *"Row 2 → Row 2 ⊕ Row 4"*.

At step 403, Bob performs a row operation based on a matrix direct sum on row 4 as: *"Row 4 → Row 4 ⊕ Row 3 ⊕ Row 1"*.

At step 404, Bob performs a row operation based on a matrix direct sum on row 3 as: *"Row 3 → Row 3 ⊕ Row 1"*.

As it can be seen, after the last operation at step 404, the positions of the information bits can be selected to be 1, 2, 3, and 5. Moreover, the mapping operation may be performed which may be based on extracting bits 1, 2, 3, and 5 of x to form the d vector.

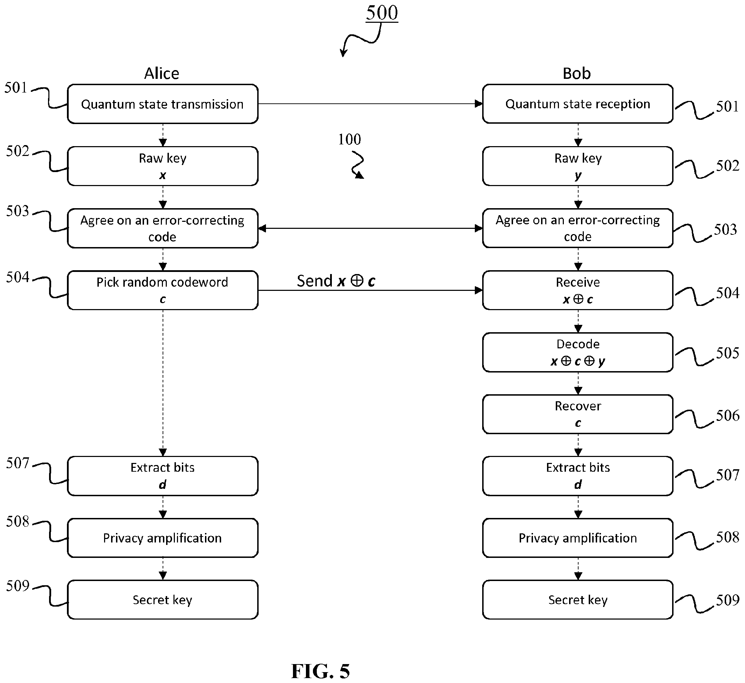

FIG. 5 schematically illustrates a procedure 500 for processing the data of the QKD system 1, based on a syndrome computed using random code words. The procedure 500 is based on a binary information reconciliation scheme.

The device 100 may, for example, perform the procedure 500 or some of the steps in the procedure 500 (e.g., the step 507), without limiting the present disclosure to a specific step or a specific function of the device.

At step 501, Alice transmits the quantum states, and Bob receives the quantum states.

At step 502, after the quantum state transmission (step 501), the raw keys at Alice and Bob, x and y, respectively, are established.

At step 503, Alice and Bob agree on an error correcting code which is characterized by a generator matrix $G$ and a parity-check matrix $H$.

At step 504, Alice randomly chooses an n-bit codeword c from a pre-agreed binary error correcting code and adds it in binary with her n-bit raw key of x.

The resulting n-bit vector of "$x \oplus c$" is then transmitted to Bob through the classical channel.

At step 505, Bob adds the received vector of "$x \oplus c$" to his n-bit raw key of y and forms a new vector of "$x \oplus c \oplus y$".

At step 506, Bob decodes the vector "$x \oplus c \oplus y$", in order to arrive at the all-zero syndrome. Moreover, if the decoding is successful, Bob gets the same n-bit code word c as Alice.

In the conventional information reconciliation, they can proceed to privacy amplification where the input size is $n$.

In the present embodiment, Bob (and/or Alice) further apply the map, as discussed above, in order to simplify privacy amplification with a reduced input size.

At step 507, Bob (and/or Alice) analyzes the possible vectors c that are compatible with the classical announcement "$x \oplus c$" with knowledge of his raw key y. Moreover, the possible set is not larger than the set of vectors whose syndromes are zero.

Bob (and/or Alice) further determines the positions in the code words that correspond to information bits of the code (i.e., corresponding to the identity matrix in the generator matrix), extracts bits in those positions, and obtains the vector $d$.

After that, the bits in d are passed to privacy amplification which generates the final secret key.

At step 508, Alice and/or Bob perform the privacy amplification on the shorter string $d$.

At step 509, Alice and/or Bob generate the secret key.

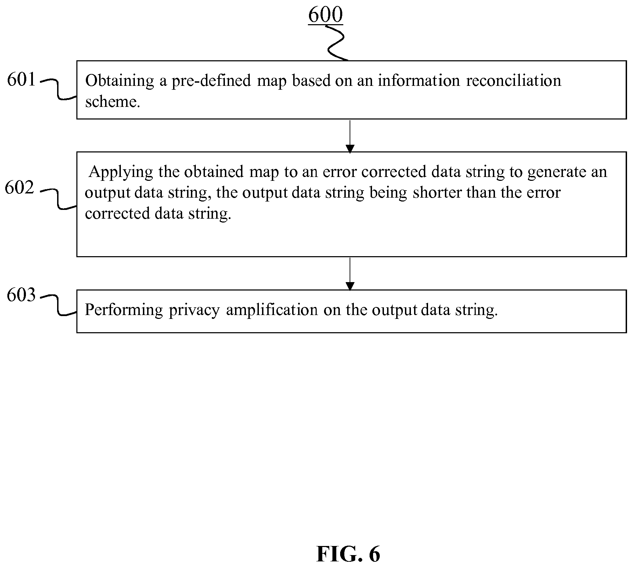

FIG. 6 shows a method 600 for processing data of the QKD system 1. The method 600 may be carried out by the device 100, as it described above.

The method 600 comprises a step 601 of obtaining a pre-defined map 102 based on an information reconciliation scheme 101.

The method 600 further comprises a step 602 of applying the obtained map 102 to an error corrected data string 103 to generate an output data string 104, the output data string 104 being shorter than the error corrected data string 103.

The method 600 further comprises a step 603 of performing privacy amplification on the output data string 104.

The present disclosure has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1. Device (100) for processing data of a Quantum Key Distribution, QKD, system (1), the device (100) being configured to:

   determine a signature of an error corrected data string (103) in accordance with an information reconciliation scheme (101);
   obtain a pre-defined map (102) based on the determined signature and the information reconciliation scheme (101);
   apply the obtained predefined map (102) to the error corrected data string (103) to generate an output data string (104), the output data string (104) being shorter than the error corrected data string (103); and
   perform privacy amplification on the output data string (104).

2. Device (100) according to claim 1, wherein the signature is associated to at least one constraint in the information reconciliation scheme.

3. Device (100) according claim 1 or 2, wherein the information reconciliation scheme includes (101) a parity-check matrix (H) and a generator matrix (G).

4. Device (100) according to claim 3, wherein the signature is a syndrome (s) determined by applying the parity-check matrix (H) to the error corrected data string (103).

5. Device (100) according to claim 3 or 4, wherein the at least one constraint is defined by the parity-check matrix (H).

6. Device (100) according to any of claims 3 to 5, wherein the output data string (104) is determined from the positions of the information bits corresponding to the identity matrix in the generator matrix (G).

7. Device (100) according to one of the claims 3 to 6, wherein mapping the error corrected data string (103) to the output data string (104) comprises extracting symbols from the error corrected data string (103), wherein the positions of the extracted symbols corresponds to the positions of the elements of the identity matrix in the generator matrix (G).

8. Device (100) according to one of the claims 1 to 7, wherein the applied map (102) is a one-to-one function.

9. Device (100) according to one of the claims 1 to 8, wherein the error corrected data string (103) is derived from at least one raw key (x, y) associated with quantum states of light generated or received by the device (100).

10. Device (100) according to any one of claims 1 to 9, wherein performing the privacy amplification procedure (308, 508) comprises generating a secret key from the output data string (104).

11. Method (600) for processing data of a Quantum Key Distribution, QKD, system (1), the method (600) comprising:

determining a signature of an error corrected data string (103) in accordance with an information reconciliation scheme (101);
obtaining (601) a pre-defined map (102) based on the determined signature and the information reconciliation scheme (101);
applying (602) the obtained predefined map (102) to the error corrected data string (103) to generate an output data string (104), the output data string (104) being shorter than the error corrected data string (103); and
performing (603) privacy amplification on the output data string (104).

12. A computer program comprising program code causing a computer to perform the method (600) according to claim 11, when being carried out on a computer.

13. A computer program product including computer program code, which, when executed by a processor, causes the method (600) according to claim 11 to be performed.

**Patentansprüche**

1. Vorrichtung (100) zum Verarbeiten von Daten eines Quantenschlüsselverteilungs(Quantum Key Distribution, QKD)-Systems (1), wobei die Vorrichtung (100) zu Folgendem konfiguriert ist:

Bestimmen einer Signatur einer fehlerkorrigierten Datenfolge (103) gemäß einem Informationsabgleichsschema (101);
Erlangen einer vordefinierten Karte (102) basierend auf der bestimmten Signatur und dem Informationsabgleichsschema (101);
Anwenden der erlangten vordefinierten Karte (102) auf die fehlerkorrigierte Datenfolge (103), um eine Ausgabedatenfolge (104) zu generieren, wobei die Ausgabedatenfolge (104) kürzer ist als die fehlerkorrigierte Datenfolge (103); und
Durchführen einer Datenschutzverstärkung an der Ausgabedatenfolge (104).

2. Vorrichtung (100) gemäß Anspruch 1, wobei die Signatur mit mindestens einer Einschränkung in dem Informationsabgleichsschema verknüpft ist.

3. Vorrichtung (100) gemäß Anspruch 1 oder 2, wobei das Informationsabgleichsschema (101) eine Paritätsprüfmatrix (H) und eine Generatormatrix (G) beinhaltet.

4. Vorrichtung (100) gemäß Anspruch 3, wobei die Signatur ein Syndrom (s) ist, das durch Anwenden der Paritätsprüfmatrix (H) auf die fehlerkorrigierte Datenfolge (103) bestimmt wird.

5. Vorrichtung (100) gemäß Anspruch 3 oder 4, wobei die mindestens eine Einschränkung durch die Paritätsprüfmatrix (H) definiert wird.

6. Vorrichtung (100) gemäß einem der Ansprüche 3 bis 5, wobei die Ausgabedatenfolge (104) aus den Positionen der Informationsbits bestimmt wird, die der Identitätsmatrix in der Generatormatrix (G) entsprechen.

7. Vorrichtung (100) gemäß einem der Ansprüche 3 bis 6, wobei das Zuteilen der fehlerkorrigierten Datenfolge (103) zu der Ausgabedatenfolge (104) Extrahieren von Symbolen aus der fehlerkorrigierten Datenfolge (103) umfasst, wobei die Positionen der extrahierten Symbole den Positionen der Elemente der Identitätsmatrix in der Generatormatrix (G) entsprechen.

8. Vorrichtung (100) gemäß einem der Ansprüche 1 bis 7, wobei die angewandte Karte (102) eine Eins-zu-Eins-Funktion ist.

9. Vorrichtung (100) gemäß einem der Ansprüche 1 bis 8, wobei die fehlerkorrigierte Datenfolge (103) von mindestens einem Rohschlüssel (x, y) abgeleitet wird, der mit Quantenzuständen von Licht verknüpft ist, das durch die Vorrichtung (100) generiert oder empfangen wird.

10. Vorrichtung (100) gemäß einem der Ansprüche 1 bis 9, wobei Durchführen der Datenschutzverstärkungsprozedur (308, 508) Generieren eines geheimen Schlüssels aus der Ausgabedatenfolge (104) umfasst.

11. Verfahren (600) zum Verarbeiten von Daten eines Quantenschlüsselverteilungs(QKD)-Systems (1), wobei das Verfahren (600) Folgendes umfasst:

Bestimmen einer Signatur einer fehlerkorrigierten Datenfolge (103) gemäß einem Informationsabgleichsschema (101);
Erlangen (601) einer vordefinierten Karte (102) basierend auf der bestimmten Signatur und dem Informationsabgleichsschema (101);
Anwenden (602) der erlangten vordefinierten Karte (102) auf die fehlerkorrigierte Datenfolge (103), um eine Ausgabedatenfolge (104) zu generieren, wobei die Ausgabedatenfolge (104) kürzer ist als die fehlerkorrigierte Datenfolge (103); und
Durchführen (603) einer Datenschutzverstärkung an der Ausgabedatenfolge (104).

12. Computerprogramm, umfassend Programmcode, der einen Computer veranlasst, das Verfahren (600) gemäß Anspruch 11 durchzuführen, wenn es auf einem Computer durchgeführt wird.

13. Computerprogrammprodukt, das Computerprogrammcode beinhaltet, der, wenn er durch einen Prozessor ausgeführt wird, veranlasst, dass das Verfahren (600) gemäß Anspruch 11 durchgeführt wird.

## Revendications

1. Dispositif (100) de traitement de données d'un système de distribution de clé quantique, QKD (1), le dispositif (100) étant configuré pour :

déterminer une signature d'une chaîne de données avec des erreurs corrigées (103) conformément à un schéma de réconciliation d'informations (101) ;
obtenir une carte prédéfinie (102) sur la base de la signature déterminée et du schéma de réconciliation d'informations (101) ;
appliquer la carte prédéfinie (102) obtenue à la chaîne de données avec des erreurs corrigées (103) pour générer une chaîne de données de sortie (104), la chaîne de données de sortie (104) étant plus courte que la chaîne de données avec des erreurs corrigées (103) ; et
exécuter une amplification de confidentialité sur la chaîne de données de sortie (104).

2. Dispositif (100) selon la revendication 1, dans lequel la signature est associée à au moins une contrainte dans le schéma de réconciliation d'informations.

3. Dispositif (100) selon la revendication 1 ou 2, dans lequel le schéma de réconciliation d'informations (101) comporte une matrice de commande de parité (H) et une matrice génératrice (G).

4. Dispositif (100) selon la revendication 3, dans lequel la signature est un syndrome (s) déterminé en appliquant la matrice de commande de parité (H) à la chaîne de données avec des erreurs corrigées (103).

5. Dispositif (100) selon la revendication 3 ou 4, dans lequel l'au moins une contrainte est définie par la matrice de commande de parité (H).

6. Dispositif (100) selon l'une quelconque des revendications 3 à 5, dans lequel la chaîne de données de sortie (104) est déterminée à partir des positions des bits d'information correspondant à la matrice d'identité dans la matrice génératrice (G).

7. Dispositif (100) selon l'une des revendications 3 à 6, dans lequel le mappage de la chaîne de données avec des erreurs corrigées (103) avec la chaîne de données de sortie (104) comprend l'extraction de symboles de la chaîne de données avec des erreurs corrigées (103), dans lequel les positions des symboles extraits correspondent aux positions des éléments de la matrice d'identité dans la matrice génératrice (G).

8. Dispositif (100) selon l'une des revendications 1 à 7, dans lequel la carte (102) appliquée est une fonction biunivoque.

9. Dispositif (100) selon l'une des revendications 1 à 8, dans lequel la chaîne de données avec des erreurs corrigées (103) est dérivée d'au moins une clé brute (x, y) associée à des états quantiques de lumière générés ou reçus par le dispositif (100).

10. Dispositif (100) selon l'une quelconque des revendications 1 à 9, dans lequel l'exécution de la procédure d'amplification de confidentialité (308, 508) comprend la génération d'une clé secrète à partir de la chaîne de données de sortie (104).

11. Procédé (600) de traitement de données d'un système de distribution de clé quantique, QKD (1), le procédé (600) comprenant :

la détermination d'une signature d'une chaîne de données avec des erreurs corrigées (103) conformément à un schéma de réconciliation d'informations (101) ;
l'obtention (601) d'une carte (102) prédéfinie sur la base de la signature déterminée et du schéma de réconciliation d'informations (101) ;
l'application (602) de la carte (102) prédéfinie obtenue à la chaîne de données avec des erreurs corrigées (103) pour générer une chaîne de données de sortie (104), la chaîne de données de sortie (104) étant plus courte que la chaîne de données avec des erreurs corrigées (103) ; et
l'exécution (603) d'une amplification de confidentialité sur la chaîne de données de sortie (104).

12. Programme informatique comprenant un code de programme amenant un ordinateur à exécuter le procédé (600) selon la revendication 11, lorsqu'il est mis en œuvre par un ordinateur.

13. Produit de programme informatique comportant un code de programme informatique qui, lorsqu'il est réalisé par un processeur, amène le procédé (600) à être réalisé selon la revendication 11.

**FIG. 1**

100

4 bits

IR

4 bits

Apply the map

2 bits

PA

2-X
key

FIG. 2

**Alice**

| | |
|---|---|
| Quantum state transmission | 301 |
| Raw key $x$ | 302 |
| Agree on an error-correcting code | 303 |
| Compute syndrome $s = Hx$ | 304 |
| Extract bits $d$ | 307 |
| Privacy amplification | 308 |
| Secret key | 309 |

**Bob**

| | |
|---|---|
| Quantum state reception | 301 |
| Raw key $y$ | 302 |
| Agree on an error-correcting code | 303 |
| Receive syndrome $s$ | 304 |
| Decode $y$ | 305 |
| Recover $x$ | 306 |
| Extract bits $d$ | 307 |
| Privacy amplification | 308 |
| Secret key | 309 |

100

300

Send $s$

**FIG. 3**

$$H = \begin{bmatrix} 0 & 1 & 1 & 1 & 1 & 1 & 0 \\ 1 & 1 & 1 & 0 & 1 & 1 & 0 \\ 1 & 1 & 1 & 1 & 0 & 1 & 1 \end{bmatrix} \qquad G = \begin{bmatrix} 0 & 0 & 1 & 0 & 0 & 1 & 0 \\ 1 & 1 & 0 & 1 & 1 & 1 & 0 \\ 1 & 1 & 1 & 1 & 0 & 1 & 1 \\ 0 & 1 & 0 & 0 & 1 & 0 & 1 \end{bmatrix} \quad \underline{400}$$

401  Row 3 → Row 3 ⊕ Row 2

$$G = \begin{bmatrix} 0 & 0 & 1 & 0 & 0 & 1 & 0 \\ 1 & 1 & 0 & 1 & 1 & 1 & 0 \\ 0 & 0 & 1 & 0 & 1 & 0 & 1 \\ 0 & 1 & 0 & 0 & 1 & 0 & 1 \end{bmatrix}$$

402  Row 2 → Row 2 ⊕ Row 4

$$G = \begin{bmatrix} 0 & 0 & 1 & 0 & 0 & 1 & 0 \\ 1 & 0 & 0 & 1 & 0 & 1 & 1 \\ 0 & 0 & 1 & 0 & 1 & 0 & 1 \\ 0 & 1 & 0 & 0 & 1 & 0 & 1 \end{bmatrix}$$

403  Row 4 → Row 4 ⊕ Row 3 ⊕ Row 1

$$G = \begin{bmatrix} 0 & 0 & 1 & 0 & 0 & 1 & 0 \\ 1 & 0 & 0 & 1 & 0 & 1 & 1 \\ 0 & 0 & 1 & 0 & 1 & 0 & 1 \\ 0 & 1 & 0 & 0 & 0 & 1 & 0 \end{bmatrix}$$

404  Row 3 → Row 3 ⊕ Row 1

$$G = \begin{bmatrix} 0 & 0 & 1 & 0 & 0 & 1 & 0 \\ 1 & 0 & 0 & 1 & 0 & 1 & 1 \\ 0 & 0 & 0 & 0 & 1 & 1 & 1 \\ 0 & 1 & 0 & 0 & 0 & 1 & 0 \end{bmatrix}$$

**FIG. 4**

EP 3 906 634 B1

**FIG. 5**

Alice

- Quantum state transmission — 501
- Raw key $x$ — 502
- Agree on an error-correcting code — 503
- Pick random codeword $c$ — 504
- Extract bits $d$ — 507
- Privacy amplification — 508
- Secret key — 509

Send $x \oplus c$

Bob

- Quantum state reception — 501
- Raw key $y$ — 502
- Agree on an error-correcting code — 503
- Receive $x \oplus c$ — 504
- Decode $x \oplus c \oplus y$ — 505
- Recover $c$ — 506
- Extract bits $d$ — 507
- Privacy amplification — 508
- Secret key — 509

500

100

$$\underline{600}$$

| 601 | Obtaining a pre-defined map based on an information reconciliation scheme. |

| 602 | Applying the obtained map to an error corrected data string to generate an output data string, the output data string being shorter than the error corrected data string. |

| 603 | Performing privacy amplification on the output data string. |

**FIG. 6**

FIG. 7

**FIG. 8**

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1542390 A1
- US 7653199 B2